# EUROPÄISCHE PATENTSCHRIFT

(11) **EP 3 531 710 B1**
(45) Veröffentlichungstag und Bekanntmachung des Hinweises auf die Patenterteilung: **30.06.2021**
(21) Anmeldenummer: 19155426.0
(22) Anmeldetag: 05.02.2019
(51) Int. Cl.: H04Q 9/00

(54) **ELEKTRONISCHES SCHNITTSTELLENMODUL ZUM ANSCHLUSS EINES SENSORS AN EIN IO-LINK-SYSTEM**
ELECTRONIC INTERFACE MODULE FOR CONNECTING A SENSOR TO AN IO-LINK SYSTEM
MODULE D'INTERFACE ÉLECTRONIQUE DESTINÉ À LA CONNEXION D'UN CAPTEUR À UN SYSTÈME IO-LINK

(30) Priorität: 22.02.2018 DE 102018202673
(43) Veröffentlichungstag der Anmeldung: 28.08.2019
(73) Patentinhaber: Christian Maier GmbH & Co. KG Maschinenfabrik, 89520 Heidenheim (DE)
(72) Erfinder: Maier, Florian, 73433 Aalen (DE); Schwenk, Günther, 89520 Heidenheim (DE); Hörger, Lukas, 89522 Heidenheim (DE)
(74) Vertreter: Dr. Weitzel & Partner

(56) Entgegenhaltungen:
- EP-A1- 2 495 915
- WO-A1-2011/153496
- US-A1- 2012 158 335
- US-A1- 2016 277 149

## Beschreibung

Die vorliegende Erfindung betrifft ein elektronisches Schnittstellenmodul zum Anschluss eines Sensors mit Standard-Schnittstelle an ein sogenanntes IO-Link-System.

Herkömmliche analoge und digitale Sensoren können mangels Kompatibilität nicht an ein IO-Link-System angeschlossen werden. DE 20 2009 010 293 U1 schlägt daher ein elektronisches Auswertemodul für Sensorsignale vor, das mehrere binäre Eingänge und analoge Eingänge aufweist, an welche herkömmliche binäre und analoge Sensoren angeschlossen werden können. Das Auswertemodul weist ferner eine Verarbeitungseinheit zur Auswertung und Weiterverarbeitung von Sensorsignalen, die an den binären und analogen Eingängen anliegen, auf. Ferner ist eine zweite Schnittstelle zur datentechnischen Ankopplung an eine IO-Link-Datenübertragungsstrecke und zur Absendung von ausgewerteten und weiterverarbeiteten Sensorsignalen vorgesehen. Dadurch ist es möglich, einfache analoge und digitale Sensoren auch für ein IO-Link-System zu nutzen, ohne dass vergleichsweise teurere Sensoren mit IO-Link-Schnittstelle verwendet werden müssen.

Bei dem IO-Link-System handelt es sich um ein Prozess-Automatisierungssystem für eine feldbusunabhängige und herstellerübergreifende Anbindung von Schaltgeräten und Sensoren an eine Steuerungsebene mittels einer kostengünstigen Punkt-zu-Punkt-Verbindung. Der Kommunikationsstandard ist in der IEC 61131-9 Norm definiert und der IO-Link-Kommunikationsstandard schafft Transparenz und durchgehende Kommunikation von der Feldgerätebene bis zur obersten Automatisierungsebene. Der IO-Link ist eine offene Schnittstelle und lässt sich in alle gängigen Feldbus- und Automatisierungssysteme integrieren, siehe hierzu auch den Fachbericht "Neue, herstellerunabhängige IO-Linkschnittstelle für die intelligente Prozessautomation" von Dipl.-Ing. Albert Book, KELLER HCW GmbH, Deutschland, Infrared Thermometer Solutions, abzurufen unter www.keller-its.de. Ein Port eines Masters kann dabei auch zum Anschluss herkömmlicher nicht IO-Link-fähiger Standardgeräte verwendet werden.

Obwohl somit ein universelles System in der Prozessautomation vorgeschlagen wird, an welches durch das vorgeschlagene elektronische Auswertemodul auch herkömmliche Sensoren angeschlossen werden können, ist die Auswahl an Sensoren begrenzt und beschränkt sich auf die üblichen in der Prozessautomation verwendeten Sensoren. So können beispielsweise Standard-Sensoren aus der Automobilelektronik mit einer SENT (Single Edge Nibble Transmission) Schnittstelle, wie sie in der SAE J2716 beschrieben wird, oder Sensoren aus der Computer- und Elektronikindustrie, die eine I²C (Inter-Integrated Circuit) Schnittstelle aufweisen, nicht in IO-Link-Systemen verwendet werden.

DE 10 2016 112 495 offenbart ein Messgerät zur Messung und Bewertung der Güte von Umgebungsluft, wobei im Messgerät ein Luftgütesensor und ein Temperatur- und Luftfeuchtesensor an eine Steuerschaltung angeschlossen sind. Der Anschluss erfolgt über interne Schnittstellen und die Steuerschaltung ist ausgebildet, Messdaten der Sensoren an ein externes Datenprotokoll anzupassen und über eine externe Schnittstelle zu einem Automatisierungssystem zu übertragen. Dadurch kann das Messgerät einfach in ein Automatisierungssystem integriert werden, da die Messdaten der Sensoren an das externe Datenprotokoll angepasst sind. Eine Anpassungsschaltung im Messgerät umfasst vorteilhaft einen IO-Link Protokoll-Chip, der ausgebildet ist, die Messdaten der Sensoren an ein IO-Link Datenprotokoll anzupassen und über eine IO-Link Schnittstelle an ein externes IO-Link Mastermodul zu übertragen. Die internen Schnittstellen können zum Beispiel als I²C oder SPI Schnittstelle ausgeführt sein, sodass die Sensoren in standardisierter Weise an den Mikrocontroller angebunden werden können, was den Entwicklungsaufwand reduziert.

DE 10 2012 014 681 A1 offenbart die Verwendung eines IO-Links zur Anbindung von Feldgeräten.

US 2012/158335 A1 offenbart ein System mit verschiedenen Sensoren, wobei jeder Sensor über eine bidirektionale Schnittstelle an eine Systemsteuerung angeschlossen ist. Der Sensor sendet an der bidirektionalen Schnittstelle unidirektional ein Standardsignal, beispielsweise im SENT-Format, SPI-Format oder im PSI5-Format und weist ein digitales Subsystem auf, sowie ein analoges Front-End-System. Zur Datenübertragung zwischen dem Front-End-System und dem digitalen SUB-System weist das analoge Front-End-System einen A/D-Wandler auf. Die Sensoren müssen nicht einzeln an die Systemsteuerung angekoppelt werden, sondern es kann auch ein Signalbus verwendet werden, beispielsweise ein I²C-Bus.

Zum weiteren Stand der Technik wird verwiesen auf US 2016/277149 A1, WO 2011/153496 A1 und EP 2 495 915 A1.

Der vorliegenden Erfindung liegt daher die Aufgabe zugrunde, die Anbindung von Sensoren mit Standard-Schnittstellen an ein IO-Link-System durch eine größere Sensorauswahl zu verbessern.

Die erfindungsgemäße Aufgabe wird durch ein elektronisches Schnittstellenmodul mit den Merkmalen von Anspruch 1 gelöst. In den abhängigen Ansprüchen sind vorteilhafte und besonders zweckmäßige Ausgestaltungen des Schnittstellenmoduls, sowie ein IO-System und eine Drehdurchführung mit wenigstens einem entsprechenden elektronischen Schnittstellenmodul angegeben.

Das erfindungsgemäße elektronische Schnittstellenmodul zum Anschluss eines Sensors mit Standard-Schnittstelle an ein IO-Link-System weist wenigstens eine erste Schnittstelle zur datenübertragenden Ankopplung des Sensors und zum Empfangen von Sensordaten des Sensors auf.

Das Schnittstellenmodul weist ferner eine elektronische Umwandlungseinrichtung zur Umwandlung von Sensordaten in IO-Link-kommunikationskompatible Daten auf.

Das Schnittstellenmodul weist ferner wenigstens eine zweite Schnittstelle zur datenübertragenden Ankopplung des IO-Link-Systems und zur Absendung von durch die Umwandlungseinrichtung umgewandelten Sensordaten auf. Erfindungsgemäß ist die erste Schnittstelle als digitale, getaktete Schnittstelle ausgeführt, die zum Empfang von Sensordaten, die gemäß einem vorgegebenen ersten Protokoll codiert sind, konfiguriert ist, und die Umwandlungseinrichtung ist eingerichtet, die empfangenen Sensordaten zur Herstellung der IO-Link-Kommunikationskompatibilität umzucodieren, demgemäß gemäß einem zweiten Protokoll, nämlich dem IO-Link-Protokoll.

Insbesondere ist im Schnittstellenmodul eine Gerätebeschreibungsdatei hinterlegt, auch IODD (IO Device Description) genannt, welche in Abhängigkeit des an der ersten Schnittstelle angeschlossenen Sensors, insbesondere bei der Inbetriebnahme und/oder Wiederinbetriebnahme des Schnittstellenmoduls automatisch erzeugt und/oder aktualisiert wird und den an der ersten Schnittstelle angeschlossenen Sensor beschreibt, beispielsweise eine Identifikationskennung des Sensors, Parameter des Sensors mit Wertebereichen, Fehlermeldungen, Prozess- und Diagnosedaten und/oder Kommunikationseigenschaften des Sensors enthält, sodass der Sensor vorteilhaft automatisch vom IO-Link-System und/oder dem Schnittstellenmodul parametriert werden kann.

Erfindungsgemäß ist die erste Schnittstelle als SENT-Schnittstelle ausgeführt. Das bedeutet, die Umwandlungseinrichtung ist eingerichtet, nach dem SENT-Protokoll codierte Daten umzuwandeln. Bei der SENT-Schnittstelle handelt es sich insbesondere um eine Schnittstelle, wie sie in der SAE J2716 in der am Prioritätstag der vorliegenden Anmeldung geltenden Fassung beschrieben ist, somit insbesondere in der Fassung vom 29. April 2016.

Alternativ ist die erste Schnittstelle als Universalschnittstelle ausgeführt, die sowohl als SENT-Schnittstelle als auch als I²C-Schnittstelle und/oder I³C-Schnittstelle verwendbar ist. Demgemäß kann in diesem Fall die Umwandlungseinrichtung sowohl nach dem SENT-Protokoll codierte Daten als auch nach dem I²C-Protokoll und/oder I³C-Protokoll codierte Daten umwandeln und sie für die IO-Link-Kommunikationskompatibilität umcodieren. Auch hier gilt bezüglich der SENT-Schnittstelle das zuvor mit Bezug auf SAE J2716 dargestellte. Die I²C-Schnittstelle wird beispielsweise im Benutzerhanduch vom 4. April 2014 von NXB Semiconductors dargestellt. Die I³C-Schnittstelle wird insbesondere in "MEMS and Sensors Whitepaper Serious" der mipi® alliance dargestellt, in der Version August 2016 "Introduction to the MIPI I3C Standardized Sensor Interface".

IO-Link wird insbesondere in der Norm IEC 61131-9 aus 2013-09-11 beschrieben beziehungsweise in EN 61131 mit dem Stand 2014-06.

Bei der SENT-Schnittstelle handelt es sich insbesondere um eine unidirektionale, asynchrone Spannungsschnittstelle mit wenigstens drei oder genau drei Leitern, nämlich einer Versorgungsspannung, insbesondere 5 V, einer Signalspannung, insbesondere mit einem Low-Pegel <0,5 V und einem High-Pegel >4,1 V, und Masse. Die Daten können in Einheiten von 4 bit entsprechend einem Nibble übertragen werden, wobei die Zeit zwischen zwei fallenden Flanken der mit konstanter Amplitude modulierten Signalspannung ausgewertet wird. Ein Datenrahmen (Frame) kann 24 bit für Messdaten, insbesondere je drei Nibbles für zwei Messkanäle, und 4 bit entsprechend einem Nibble zur Fehlererkennung umfassen, insbesondere ferner 4 bit entsprechend einem Nibble für Status und Kommunikation, in Summe also acht Nibbles. Wahlweise können Daten auch mit anderen Nibble-Rahmen (Frames) übertragen werden, beispielsweise in einem 5-Nibble-Rahmen mit drei Nibbles für einen Einzelmesskanal und je einem Nibble für die Fehlererkennung und für den Status und Kommunikation.

Zu Beginn eines jeden Rahmens (Frames) kann ein Synchronisationsbereich übertragen werden. Beispielsweise wird das sogenannte "Secure"-Format verwendet, bei welchem auf die ersten 12 bit entsprechend drei Nibble mit den eigentlichen Daten ein 8-bit-Aufwärtszähler (entsprechend zwei Nibble) sowie ein Nibble folgt, das den invertierten Inhalt des ersten Daten-Nibbles enthält.

Als statistische Werte können zum Beispiel die Kennung des Sensortyps, eine Herstellerkennung des Sensors und/oder eine Sensorkennlinie über die Schnittstelle übergeben werden, jedoch auch veränderliche Werte. Damit ist/sind eine automatische Erkennung des Sensors und/oder die Erkennung eines fehlerhaften Anschlusses des Sensors möglich.

Die I²C-Schnittstelle verfügt insbesondere über zwei Signalleitungen, nämlich eine Taktleitung und eine Datenleitung für serielle Daten. Die Schnittstelle kann unidirektional und/oder bidirektional arbeiten. Beim Beginn einer Kommunikation kann ein Start-Signal angezeigt werden, gefolgt von einer Adresse. Auch das Ende der Kommunikation kann durch ein Signal angezeigt werden.

Gemäß einer Ausführungsform der Erfindung ist ferner wenigstens eine dritte Schnittstelle vorgesehen, die als Analogschnittstelle ausgeführt ist. Auch kann wenigstens eine vierte Schnittstelle vorgesehen sein, die als binärer Eingang ausgeführt ist. Die vierte Schnittstelle kann auch dann vorgesehen sein, wenn keine dritte Schnittstelle vorgesehen ist.

Gemäß einem Ausführungsbeispiel der Erfindung ist eine einzige erste Schnittstelle vorgesehen, sowie eine einzige zweite Schnittstelle. An das elektronische Schnittstellenmodul ist insbesondere ein einziger Sensor angeschlossen.

Ein erfindungsgemäßes IO-System umfasst einen IO-Link-Master, wobei an den IO-Link-Master eine Vielzahl von elektronischen Schnittstellenmodulen der dargestellten Art parallel zueinander mit jeweils ihrer zweiten Schnittstelle angeschlossen ist.

Bei den Sensoren handelt es sich insbesondere um einen oder mehrere der folgenden Sensoren:
- Verschleißsensor
- Drucksensor
- Temperatursensor
- Drehzahlsensor
- Drehmomentsensor
- Leckagesensor

Eine erfindungsgemäße Drehdurchführung zur Übergabe eines Fluids zwischen einem umlaufenden und einem stationären Bauteil weist wenigstens einen oder mehrere der genannten Sensoren auf, wobei insbesondere jeder der genannten Sensoren beispielsweise jeweils einmal vorgesehen ist. An dem wenigstens einen Sensor oder an jedem Sensor ist ein elektronisches Schnittstellenmodul der dargestellten Art mit seiner ersten Schnittstelle angeschlossen, wobei die erste Schnittstelle vorteilhaft als SENT-Schnittstelle oder als Universalschnittstelle ausgeführt ist, die sowohl als SENT-Schnittstelle als auch als I²C-Schnittstelle und/oder I³C-Schnittstelle verwendbar ist.

Die vorliegende Erfindung ermöglicht die Kombination einer in der Praxis sehr gut arbeitenden ersten Schnittstelle mit den Vorteilen eines IO-Link-Systems, sodass entsprechende kostengünstige Sensoren zuverlässig an IO-Link-Systeme angeschlossen werden können.

Die Erfindung soll nachfolgend anhand eines Ausführungsbeispiels und der Figur exemplarisch beschrieben werden.

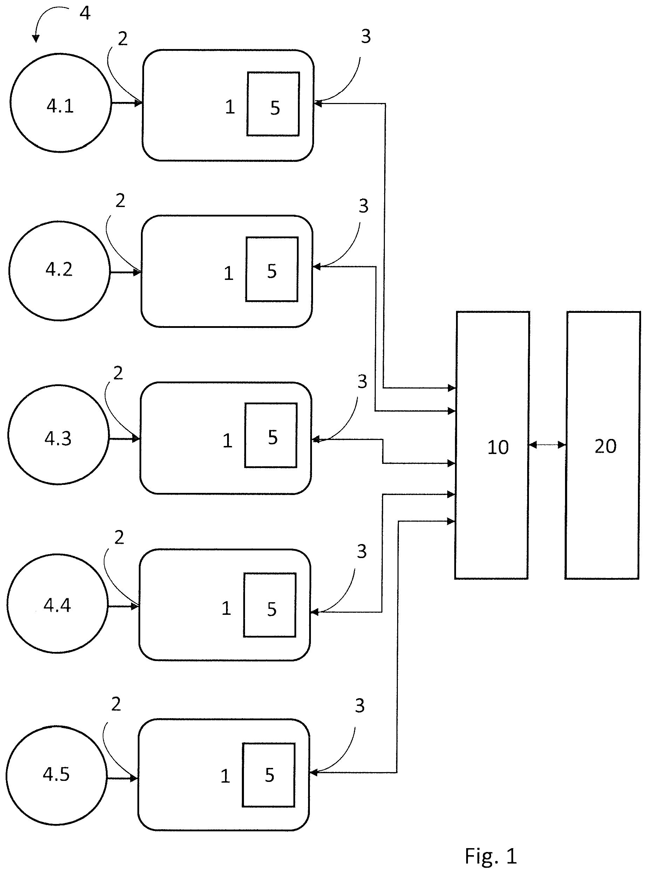

In der Figur 1 ist ein IO-Link-System dargestellt, mit einem IO-Link-Master 10 und einer daran angeschlossenen Auswerteeinheit 20. An den IO-Link-Schnittstellen des IO-Link-Masters 10 ist eine Vielzahl von elektronischen Schnittstellenmodulen 1 angeschlossen, wobei jedes Schnittstellenmodul 1 eine erste Schnittstelle 2 und eine zweite Schnittstelle 3 aufweist. Die zweite Schnittstelle 3 ist als IO-Link-Schnittstelle ausgeführt und die erste Schnittstelle 2 ist als digitale, getaktete Schnittstelle zum Empfang von Sensordaten mit Standard-Schnittstelle ausgeführt, wobei die Sensordaten entsprechend eines ersten vorgegebenen Protokolls codiert sind, in Abhängigkeit der jeweiligen Standard-Schnittstelle eines Sensors 4, der an der jeweiligen ersten Schnittstelle 2 angeschlossen ist.

Im gezeigten Ausführungsbeispiel sind beispielsweise fünf Sensoren 4 über fünf elektronische Schnittstellenmodule 1 an dem IO-Link-Master 10 angeschlossen, wobei die Sensoren 4 mit dem Index 1 bis 5 durchnummeriert sind. Beispielsweise handelt es sich beim Sensor 4.1 um einen Verschleißsensor, beim Sensor 4.2 um einen Drehmomentsensor, beim Sensor 4.3 um einen Druck- und Temperatursensor, beim Sensor 4.4 um einen Drehzahlsensor und beim Sensor 4.5 um einen Leckagesensor. Diese Sensortypen sind jedoch nur beispielhaft zu verstehen.

Wenigstens ein Sensor 4, beispielsweise die Sensoren 4.1 und 4.2, weist/weisen eine SENT-Schnittstelle auf. Wenigstens ein Sensor, beispielsweise der Sensor 4.5, weist eine I²C-Schnittstelle auf. Wenigstens ein Sensor 4, beispielsweise die Sensoren 4.3 und 4.4, weist/weisen eine analoge oder digitale Schnittstelle auf.

Die Sensoren 4 können Bestandteil einer Drehdurchführung sein, die zur Übergabe eines Fluids zwischen einem umlaufenden und einem stationären Bauteil ausgeführt ist, wobei die Drehdurchführung hier nicht näher dargestellt ist. Die Sensoren erfassen entsprechend die genannten Messwerte Verschleiß, Drehmoment, Druck und/oder Temperatur, Drehzahl und/oder Leckage in der Drehdurchführung.

Durch das Vorsehen der Vielzahl von elektronischen Schnittstellenmodulen 1, wobei je Sensor 4 ein einziges elektronisches Schnittstellenmodul 1 vorgesehen ist, können die herkömmlich verwendeten Sensoren an ein IO-Link-System beziehungsweise an einen IO-Link-Master 10 angeschlossen werden.

Jedes Schnittstellenmodul 1 weist hierfür eine elektronische Umwandlungseinrichtung 5 auf, welche die Sensordaten des entsprechenden Sensors 4 umcodiert und zur Kommunikation mit dem IO-Link-Master 10 zur Verfügung stellt.

### Bezugszeichenliste

- 1: Schnittstellenmodul
- 2: erste Schnittstelle
- 3: zweite Schnittstelle
- 4: Sensor
- 4.1 - 4.5: Sensoren
- 5: elektronische Umwandlungseinrichtung
- 10: IO-Link-Master
- 20: Auswerteeinheit

## Patentansprüche

1. Elektronisches Schnittstellenmodul (1) zum Anschluss eines Sensors (4) mit Standard-Schnittstelle an ein IO-Link-System,
1.1 mit wenigstens einer ersten Schnittstelle (2) zur datenübertragenden Ankopplung des Sensors (4) und zum Empfang von Sensordaten des Sensors (4);
mit einer elektronischen Umwandlungseinrichtung (5) zur Umwandlung von Sensordaten in IO-Link-kommunikationskompatible Daten;
mit wenigstens einer zweiten Schnittstelle (3) zur datenübertragenden Ankopplung des IO-Link-Systems und zur Absendung von durch die Umwandlungseinrichtung (5) umgewandelten Sensordaten; wobei die erste Schnittstelle (2) als digitale, getaktete Schnittstelle zum Empfang von Sensordaten, die gemäß einem vorgegebenen ersten Protokoll codiert sind, ausgeführt ist und die Umwandlungseinrichtung (5) eingerichtet ist, die empfangenen Sensordaten zur Herstellung der IO-Link-Kommunikationskompatibilität umzucodieren; wobei die erste Schnittstelle (2) als SENT-Schnittstelle ausgeführt ist oder 1.0 die erste Schnittstelle (2) als Universalschnittstelle ausgeführt ist, die sowohl als SENT-Schnittstelle als auch als I²C-Schnittstelle und/oder I³C-Schnittstelle verwendbar ist.

2. Elektronisches Schnittstellenmodul (1) gemäß Anspruch 1, **dadurch gekennzeichnet, dass** wenigstens eine dritte Schnittstelle vorgesehen ist, die als Analogschnittstelle ausgeführt ist.

3. Elektronisches Schnittstellenmodul (1) gemäß Anspruch 1 oder 2,
**dadurch gekennzeichnet, dass** wenigstens eine vierte Schnittstelle vorgesehen ist, die als binärer Eingang ausgeführt ist.

4. Elektronisches Schnittstellenmodul (1) gemäß einem der Ansprüche 1 bis 3, **dadurch gekennzeichnet, dass** eine einzige oder zwei erste Schnittstelle(n) (2) und/oder eine einzige zweite Schnittstelle (3) vorgesehen sind.

5. IO-Link-System mit einem IO-Link-Master (10), **dadurch gekennzeichnet, dass** an dem IO-Link-Master (10) eine Vielzahl von elektronischen Schnittstellenmodulen (1) gemäß einem der Ansprüche 1 bis 4 parallel mit jeweils ihrer zweiten Schnittstelle (3) angeschlossen ist.

6. IO-Link-System gemäß Anspruch 5, **dadurch gekennzeichnet, dass** an jedem elektronischen Schnittstellenmodul (1) jeweils ein Sensor (4) an der ersten Schnittstelle (2) angeschlossen ist.

7. IO-Link-System gemäß Anspruch 6, **dadurch gekennzeichnet, dass** die Sensoren (4) wenigstens einen oder mehrere der folgenden Sensoren umfassen:
- Verschleißsensor
- Drucksensor
- Temperatursensor
- Druck- und Temperatursensor
- Drehzahlsensor
- Drehmomentsensor
- Leckagesensor.

8. Drehdurchführung zur Übergabe eines Fluids zwischen einem umlaufenden und einem stationären Bauteil, mit wenigstens einem oder mehreren der folgenden Sensoren (4):
- Verschleißsensor
- Drucksensor
- Temperatursensor
- Druck- und Temperatursensor
- Drehzahlsensor
- Drehmomentsensor
- Leckagesensor,
**dadurch gekennzeichnet, dass** an dem Sensor (4) oder an jedem Sensor (4) ein von der Drehdurchführung umfasstes elektronisches Schnittstellenmodul (1) mit wenigstens einer ersten Schnittstelle (2) zur datenübertragenden Ankopplung des Sensors (4) und zum Empfang von Sensordaten des Sensors (4) angeschlossen ist, wobei das elektronische Schnittstellenmodul (1) ferner Folgendes umfasst:
eine elektronische Umwandlungseinrichtung (5) zur Umwandlung von Sensordaten in IO-Link-kommunikationskompatible Daten;
wenigstens eine zweite Schnittstelle (3) zur datenübertragenden Ankopplung des IO-Link-Systems und zur Absendung von durch die Umwandlungseinrichtung (5) umgewandelten Sensordaten; wobei die erste Schnittstelle (2) als digitale, getaktete Schnittstelle zum Empfang von Sensordaten, die gemäß einem vorgegebenen ersten Protokoll codiert sind, ausgeführt ist und die Umwandlungseinrichtung (5) eingerichtet ist, die empfangenen Sensordaten zur Herstellung der IO-Link-Kommunikationskompatibilität umzucodieren.

9. Drehdurchführung gemäß Anspruch 8, **dadurch gekennzeichnet, dass** die erste Schnittstelle (2) als SENT-Schnittstelle ausgeführt ist oder die erste Schnittstelle (2) als Universalschnittstelle ausgeführt ist, die sowohl als SENT-Schnittstelle als auch als I²C-Schnittstelle und/oder I³C-Schnittstelle verwendbar ist.

10. Drehdurchführung gemäß einem der Ansprüche 8 oder 9, **dadurch gekennzeichnet, dass** jeder der genannten Sensoren (4), insbesondere einmal, vorgesehen ist.

## Claims

1. Electronic interface module (1) for connecting a sensor (4) with a standard interface to an IO-Link system,
having at least one first interface (2) for data-transmitting coupling of the sensor (4) and for receiving sensor data from the sensor (4);
having an electronic conversion device (5) for converting sensor data into IO-Link communication-compatible data;
having at least one second interface (3) for data-transmitting coupling of the IO-Link system and for sending sensor data converted by the conversion device (5); wherein the first interface (2) is designed as a digital, clocked interface for receiving sensor data which are encoded in accordance with a predetermined first protocol, and the conversion device (5) is set up to recode the received sensor data in order to produce IO-Link communication compatibility;
wherein the first interface (2) is implemented as a SENT interface or the first interface (2) is implemented as a universal interface which can be used both as a SENT interface and as an I²C interface and/or I³C interface.

2. Electronic interface module (1) according to claim 1, **characterized in that** at least one third interface is provided, which is implemented as an analog interface.

3. Electronic interface module (1) according to claim 1 or 2, **characterized in that** at least one fourth interface is provided, which is implemented as a binary input.

4. Electronic interface module (1) according to one of claims 1 to 3, **characterized in that** a single or two first interface(s) (2) and/or a single second interface (3) are provided.

5. IO-Link system having an IO-Link master (10), **characterized in that** a plurality of electronic interface modules (1) according to one of claims 1 to 4 are connected, each with its second interface (3), in parallel to the IO-Link master (10).

6. IO-Link system according to claim 5, **characterized in that** a sensor (4) is connected to the first interface (2) on each electronic interface module (1).

7. IO-Link system according to claim 6, **characterized in that** the sensors (4) comprise at least one or more of the following sensors:
- wear sensor,
- pressure sensor,
- temperature sensor,
- pressure and temperature sensor,
- speed sensor,
- torque sensor,
- leakage sensor.

8. A rotary feedthrough for transferring a fluid between a rotating component and a stationary component, comprising at least one or more of the following sensors (4):
- wear sensor,
- pressure sensor,
- temperature sensor,
- pressure and temperature sensor,
- speed sensor,
- torque sensor,
- leakage sensor,
**characterized in that** an electronic interface module (1), which is included in the rotary feedthrough and comprises at least a first interface (2) for data-transmitting coupling of the sensor (4) and for receiving sensor data of the sensor (4), is connected to the sensor (4) or to each sensor (4), wherein the electronic interface module (1) further comprises:
an electronic conversion device (5) for converting sensor data into IO-Link communication-compatible data;
at least one second interface (3) for data-transmitting coupling of the IO-Link system and for sending sensor data converted by the conversion device (5);
wherein the first interface (2) is designed as a digital, clocked interface for receiving sensor data encoded according to a predetermined first protocol, and
the conversion device (5) is set up to recode the received sensor data to establish IO-Link communication compatibility.

9. Rotary feedthrough according to claim 8, **characterized in that** the first interface (2) is designed as a SENT interface or the first interface (2) is designed as a universal interface which can be used both as a SENT interface and as a I²C interface and/or I³C interface.

10. Rotary feedthrough according to one of claims 8 or 9, **characterized in that** each of said sensors (4) is provided, in particular once.

## Revendications

1. Module d'interface électronique (1) pour la connexion d'un capteur (4) doté d'une interface standard à un système IO-Link,
avec au moins une première interface (2) pour le couplage en transmission de données du capteur (4) et pour la réception de données de capteur du capteur (4) ;
avec un dispositif de conversion électronique (5) pour la conversion de données de capteur en données compatibles avec la communication IO-Link ;
avec au moins une deuxième interface (3) pour le couplage en transmission de données du système IO-Link et pour l'envoi de données de capteur converties par le dispositif de conversion (5) ; dans lequel
la première interface (2) est réalisée sous la forme d'une interface numérique cadencée pour la réception de données de capteur qui sont codées selon un premier protocole prédéfini et le dispositif de conversion (5) est conçu pour recoder les données de capteur reçues afin d'établir la compatibilité avec la communication IO-Link ; dans lequel
la première interface (2) est réalisée sous la forme d'une interface SENT ou
la première interface (2) est réalisée sous la forme d'une interface universelle qui peut être utilisée aussi bien comme interface SENT que comme interface I²C et/ou interface I³C.

2. Module d'interface électronique (1) selon la revendication 1, **caractérisé en ce qu'**il est prévu au moins une troisième interface qui est réalisée sous la forme d'une interface analogique.

3. Module d'interface électronique (1) selon la revendication 1 ou 2, **caractérisé en ce qu'**il est prévu au moins une quatrième interface qui est réalisée sous la forme d'une entrée binaire.

4. Module d'interface électronique (1) selon l'une des revendications 1 à 3, **caractérisé en ce qu'**une seule ou deux première(s) interface(s) (2) et/ou une seule deuxième interface (3) sont prévues.

5. Système IO-Link comprenant un maître IO-Link (10), **caractérisé en ce qu'**une pluralité de modules d'interface électroniques (1) selon l'une des revendications 1 à 4 sont connectés en parallèle au maître IO-Link (10), chacun via sa deuxième interface (3).

6. Système IO-Link selon la revendication 5, **caractérisé en ce qu'**un capteur (4) est relié à chaque module d'interface électronique (1) au niveau de la première interface (2).

7. Système IO-Link selon la revendication 6, **caractérisé en ce que** les capteurs (4) comprennent au moins un ou plusieurs des capteurs suivants :
- capteur d'usure
- capteur de pression
- capteur de température
- capteur de pression et de température
- capteur de vitesse de rotation
- capteur de couple
- capteur de fuite.

8. Traversée rotative pour le transfert d'un fluide entre un composant rotatif et un composant stationnaire, comprenant au moins un ou plusieurs des capteurs suivants (4) :
- capteur d'usure
- capteur de pression
- capteur de température
- capteur de pression et de température
- capteur de vitesse de rotation
- capteur de couple
- capteur de fuite,
**caractérisée en ce qu'**un module d'interface électronique (1) inclus par la traversée rotative et ayant au moins une première interface (2) pour le couplage en transmission de données du capteur (4) et pour la réception de données de capteur du capteur (4) est connecté au capteur (4) ou à chaque capteur (4), le module d'interface électronique (1) comprenant en outre :
un dispositif de conversion électronique (5) pour la conversion de données de capteur en données compatibles avec la communication IO-Link ;
au moins une deuxième interface (3) pour le couplage en transmission de données du système IO-Link et pour l'envoi de données de capteur converties par le dispositif de conversion (5) ; dans laquelle
la première interface (2) est réalisée sous la forme d'une interface numérique cadencée pour la réception de données de capteur qui sont codées selon un premier protocole prédéfini et le dispositif de conversion (5) est conçu pour recoder les données de capteur reçues afin d'établir la compatibilité avec la communication IO-Link.

9. Traversée rotative selon la revendication 8, **caractérisée en ce que** la première interface (2) est réalisée sous la forme d'une interface SENT ou la première interface (2) est réalisée sous la forme d'une interface universelle qui peut être utilisée aussi bien comme interface SENT que comme interface I²C et/ou interface I³C.

10. Traversée rotative selon l'une des revendications 8 ou 9, **caractérisée en ce que** chacun desdits capteurs (4) est prévu, en particulier une fois.
